# EUROPÄISCHE PATENTSCHRIFT

(11) **EP 1 340 046 B1**
(45) Veröffentlichungstag und Bekanntmachung des Hinweises auf die Patenterteilung: **28.03.2012**
(21) Anmeldenummer: 01999788.1
(22) Anmeldetag: 21.11.2001
(51) Int. Cl.: G01D 5/16, G01K 7/22, G01L 9/00, G01N 27/00

(54) **VORRICHTUNG ZUR FESTSTELLUNG UND/ODER WEITERLEITUNG ZUMINDEST EINES UMWELTEINFLUSSES, HERSTELLUNGSVERFAHREN UND VERWENDUNG DAZU**
DEVICE FOR DETECTING AND/OR TRANSMITTING AT LEAST ONE ENVIRONMENTAL INFLUENCE, METHOD FOR PRODUCING THE SAME AND USE THEREOF
DISPOSITIF PERMETTANT LA DETERMINATION ET/OU LA TRANSMISSION D'AU MOINS UNE INFLUENCE D'ENVIRONNEMENT, PROCEDE D'OBTENTION ET UTILISATION Y RELATIFS

(30) Priorität: 08.12.2000 DE 10061299
(43) Veröffentlichungstag der Anmeldung: 03.09.2003
(73) Patentinhaber: PolyIC GmbH & Co. KG, 90763 Fürth (DE)
(72) Erfinder: CLEMENS, Wolfgang, 90617 Puschendorf (DE); SCHEWE, Herbert, 91074 Herzogenaurach (DE)
(74) Vertreter: LOUIS, PÖHLAU, LOHRENTZ
(86) Internationale Anmeldenummer: PCT/DE2001/004370
(87) Internationale Veröffentlichungsnummer: WO 2002/046703

(56) Entgegenhaltungen:
- EP-A- 0 511 807
- EP-A- 0 685 985
- EP-A- 0 979 715
- EP-A- 1 048 912
- DE-A- 4 243 832
- US-A- 3 769 096
- US-A- 5 970 318

## Beschreibung

Die Erfindung betrifft eine Vorrichtung zur Feststellung und/oder Weiterleitung zumindest eines Umwelteinflusses, Verwendungen sowie ein Herstellungsverfahren dazu.

Eine Photodiode, eine Lichtschranke, eine Solarzelle, ein Feuchtigkeits-, Druck- und/oder Temperatursensor ist beispielsweise eine Vorrichtung zur Feststellung und/oder Weiterleitung zumindest eines Umwelteinflusses, die zumindest ein empfangendes Element, das einen Umwelteinfluss aufnimmt und eine Auswerteschaltung, die ein Signal vom Empfängerelement übernimmt, auswertet, eventuell verstärkt und weiterleitet, umfasst.

Bekannt sind solche Vorrichtungen auf der Basis von herkömmlichen anorganischen Halbleitermaterialien wie Silizium und Galliumarsenid. Diese Vorrichtungen, wie z.B. Sensoren, werden in Herstellungsprozessen der konventionellen Halbleitertechnologie hergestellt. Sowohl die verwendeten Rohstoffe als auch die Prozessschritte führen dazu, dass die Vorrichtungen teuer sind und entsprechend nur sehr selektiv eingesetzt werden.

So ist beispielsweise aus der DE 42 43 832 ist eine Tastenanordnung mit Lichtleitsensor bekannt, bei der eine Empfängervorrichtung mit organischen Farbstoff-Solarzellen in Dünnfilmtechnik ausgeführt sind. Die Tastenanordnung ist an einen herkömmlichen Strom-Spannungswandler angeschlossen.

Aus der US 5,970,318 ist ein Display bekannt, wobei das Licht emittierende Element und die Ansteuerelektronik auf einem Substrat angeordnet sind. Die Druckschrift offenbart jedoch nichts über die Anordnung eines Empfängerelements.

Da aber eine umfassende Sensorik für nahezu alle Bereiche der Industrie, der Energie, des Transports und des Lebens im allgemeinen Vorteile bringt, weil sie eine verbesserte Erfassung der momentan herrschenden Umstände und/oder eine verbesserte Energienutzung ermöglicht, besteht der Bedarf, billigere Vorrichtungen der genannten Art zu schaffen.

Aufgabe der vorliegenden Erfindung ist es daher, eine Vorrichtung zur Feststellung und/oder Weiterleitung zumindest eines Umwelteinflusses zur Verfügung zu stellen, die von der Leistung her vergleichbar mit den herkömmlichen Vorrichtungen aus der Halbleitertechnologie und/oder im Vergleich zu diesen billiges ist.

Um diese Aufgabe zu lösen gibt es prinzipiell zwei Ansatzpunkte: Zum einen kann zumindest ein billigerer Rohstoff zur Herstellung verwendet werden und zum anderen kann das aufwendige Herstellungsverfahren der Halbleitertechnologie über Beschichtung, Strukturierung, Ätzung und Rückätzung etc. vereinfacht werden.

Beide Ansatzpunkte werden beim Gegenstand der Erfindung berücksichtigt, der die neue organische Halbleitertechnologie (integrated plastic circuits (IPC) und/oder organic field effect transistors (OFET)) in diesem Gebiet einführt.

Gegenstand der Erfindung ist eine Vorrichtung zur Feststellung und/oder Weiterleitung zumindest eines Umwelteinflusses, die im wesentlichen aus organischem Material aufgebaut ist und die zumindest ein Empfängerelement, das zumindest einen Umwelteinfluss aufnimmt und in ein elektrisches Signal wandelt und zumindest eine Auswerteschaltung, die ein empfangenes Signal bearbeitet und weiterleitet, umfasst, wobei zumindest ein organisches funktionelles Material in dem Empfängerelement und dem Auswerteelement ist gleich ist. Außerdem ist Gegenstand der Erfindung ein Verfahren zur Herstellung einer Vorrichtung zur Feststellung und/oder Weiterleitung zumindest eines Umwelteinflusses, bei dem durch Beschichten mit organischem Material auf zumindest einem Substrat zumindest ein Empfängerelement, eine Auswerteschaltung und/oder eine dazugehörige Verschaltung aufgebaut wird. Schließlich ist Gegenstand der Erfindung die Verwendung einer Vorrichtung zur Feststellung und/oder Weiterleitung zumindest eines Umwelteinflusses in der Industrie, der Überwachung/Sensorik und/oder im Transport.

Als Umwelteinfluss wird hier jeder quantifizierbare und in einen Strom und/oder eine Spannung wandelbare Impuls der Umgebung bezeichnet. Beispiel dafür ist aus der Natur ein Sonnenstrahl, eine Luftdruckveränderung oder im Industriellen Bereich ein Anstieg der Konzentration eines bestimmten Gases, eine Temperatur- und/oder eine Feuchtigkeitsveränderung. All diese Einflüsse können über entsprechend sensitive chemische Verbindungen (die im Empfängerelement vorliegen) dazu führen, dass ein leitender Stoff nicht oder wesentlich weniger leitend wird und/oder dass in einem Stoff Spannung oder Strom erzeugt wird und/oder dass der elektrische Widerstand in einem Stoff verändert wird. Diese Auswirkungen sind messbar und über eine Auswerteschaltung in definierte Signale wandelbar oder zur Energiegewinnung speicherbar.

Auch ist ein Tast- bzw. Drucksensor denkbar, bei dem ein elektrisches Signal durch Druck, z.B. wie bei einer Tastatur, erzeugt wird.

Besonders vorteilhaft ist die Ausführungsform der Vorrichtung zur Feststellung und/oder Weiterleitung zumindest eines Umwelteinflusses bei der das Empfängerelement und ein Element der Auswerteschaltung integriert auf einem Substrat vorliegen. Dadurch entstehen sehr kompakte Vorrichtungen, die eine große Volumeneinsparung gegenüber den herkömmlichen Vorrichtungen der Silizium-dominierten Halbleitertechnologie zeigen. Dabei ist es möglich, dass die Si-Sensoren kleiner als die neuen Vorrichtungen sind, wichtiger ist an der Stelle vornehmlich die einfache Aufbringung z.B. auf flexible Substrate und/oder auf Substrate (Gehäuse, Verpackung) die sowieso schon da sind. Damit werden auch völlig neue Verwendungen der Vorrichtungen eröffnet, weil die Vorrichtungen gemäß dieser Ausführungsform dank ihrer Billigkeit als Einmal-Produkte einsetzbar sind und dank ihres geringen Volumens z.B. als Etiketten etc. brauchbar sind. Denkbar ist dadurch z.B. eine Arzneimittelverpackung, die über eine entsprechende Vorrichtung verfügend, Auskunft geben kann wie lange das Präparat bei welchen Temperaturen gelagert wurde.

Je nach Ausführungsform der Vorrichtung ist sie ein Temperatur-, Feuchtigkeits-, und/oder ein Drucksensor, eine Lichtschranke, ein optischer Sensor, eine Solarzelle und/oder etwas Vergleichbares.

Nach einer vorteilhaften Ausführungsform kann die Vorrichtung parallel mehrere Umwelteinflüsse empfangen, bearbeiten und weiterleiten (senden). Dabei kann z.B. die Temperatur, der Druck und die Zusammensetzung eines Gas- und/oder Flüssigkeitsgemisches erkannt, zusammen mit der Zeitdauer gespeichert und/oder an ein Regel- und Steuersystem weitergegeben werden. Es kann ein bestimmter Schwellenwert an Temperatur, Feuchtigkeit, Druck, Lichtstärke gemessen und dargestellt werden. Dieser Vorgang kann entweder reversibel sein und den aktuellen Wert erfassen oder irreversibel, beispielsweise zur Klärung ob ein Tiefkühlgut kurzfristig einmal aufgetaut ist oder ein Paket/Medikament einmal einer hohen Temperatur oder Feuchtigkeit ausgesetzt war. Alle bisher bekannten Einsatzgebiete von Vorrichtungen zur Feststellung und/oder Weiterleitung zumindest eines Umwelteinflusses lassen sich durch die neue, vorwiegend auf organischen Materialien basierende Halbleitertechnologie, verwirklichen. Gleichzeitig ist die Auswahl an sensitiven chemischen Verbindungen, die im Empfängerelement eingesetzt werden können unbegrenzt und spezifisch auf das jeweilige Problem abstimmbar und/oder für die jeweilige Aufgabenstellung entwickelbar.

Der Begriff "organisches Material/Funktionsmaterial" umfasst hier alle Arten von organischen, metallorganischen und/oder anorganischen Kunststoffen, die im Englischen z.B. mit "plastics" bezeichnet werden. Es handelt sich um alle Arten von Stoffen mit Ausnahme der Halbleiter, die die klassischen Dioden bilden (Germanium, Silizium), und der typischen metallischen Leiter (z.B. Kupfer, Aluminium), die vorliegend nur im Rahmen von Elektroden und/oder Kontaktanschlüssen eingesetzt werden. Eine Beschränkung im dogmatischen Sinn auf organisches Material als Kohlenstoff-enthaltendes Material ist demnach nicht vorgesehen. Weiterhin soll der Term keiner Beschränkung im Hinblick auf die Molekülgröße, insbesondere auf polymere und/oder oligomere Materialien unterliegen, sondern es ist durchaus auch der Einsatz von "small molecules" möglich.

Besonders vorteilhaft ist die Ausführungsform, bei der zumindest ein organisches funktionelles Material wie z.B. der organische Leiter, der organische Isolator und/oder der organische Halbleiter in zumindest einem Empfängerelement und in zumindest einem Element der Auswerteschaltung der Vorrichtung gleich sind. Diese Ausführungsform zeichnet sich durch besonders vorteilhafte Herstellungskosten aus, wenn ein organisches Material z.B. durch Drucken oder Rakeln an mehreren Stellen des Substrats in einem Arbeitsgang aufgebracht wird.

Für den Fall, dass als Umwelteinfluss die Temperaturänderung empfangen wird, kann z.B. die Leiterbahn des Empfängerelements aus organischem Material wie Polyanilin und/oder einem organischen Leiter sein, der ab einer bestimmten Temperatur seinen Widerstand derart verändert, dass er ein Isolator oder nahezu ein Isolator wird. Dies kann ein reversibler oder ein irreversibler Prozess innerhalb des Materials sein. Jedenfalls wird das Empfängerelement für diese Vorrichtung mit einem organischen Leiter ausgestattet, in dem bei Änderung der Temperatur entweder durch Ladungstrennung Spannung oder Strom erzeugt wird oder eine sprunghafte Veränderung des Widerstands eintritt. So wird das Empfängerelement nicht nur in die Lage versetzt den Umwelteinfluss "Temperaturänderung" aufzunehmen und zu messen, sondern auch ein Signal an die Auswerteschaltung weiterzugeben. Beispiele für ein solches Material sind PTC (positive temperature coefficient) thermisch sensitive Widerstände, die aus dotiertem polycrystallinen keramischem Werkstoff auf der Basis von Barium Titanat herstellbar sind.

Für den Fall, dass die Zusammensetzung eines Gasgemisches wie z.B. die Luftfeuchtigkeit gemessen werden soll, kann ein organisches leitendes Material eingesetzt werden, bei dem je nach Konzentration des zu messenden Stoffes, z.B. Wasser in Luft, in der Leiterbahn ein Strom erzeugt wird oder eine Änderung des Widerstands erfolgt (beispielsweise über eine Änderung des Löslichkeitsverhaltens vgl. PEDOT). Hier kann es sich, je nach Material, wieder um eine reversible oder um eine irreversible Änderung des Widerstands handeln.

Für den Fall, dass der Druck gemessen werden soll sind organische piezoelektrische Kunststoffe bekannt, die eine Spannung erzeugen, wenn sie gedehnt oder gestaucht werden.

Für Lichtsensoren gibt es ebenfalls Beispiele, wo die organischen funktionellen Materialien einer Diode so gewählt werden, dass sie unter Lichteinwirkung Spannung erzeugen und/oder ihre physikalischen Eigenschaften reversibel oder irreversibel ändern.

Nach einer vorteilhaften Ausführungsform verstärkt die Vorrichtung aufgenommene Umwelteinflüsse oder -signale und gibt sie entweder linear (analog) oder digital weiter.

Nach einer vorteilhaften Ausführungsform des Verfahrens wird zumindest eine Schicht aus organischem Funktionsmaterial auf dem Substrat durch Bedrucken (z.B. Tampondruck, Offset-Druck) oder Rakeln, d.h. durch strukturiertes Aufbringen auf einer unteren Schicht oder dem Substrat oder durch Einrakeln/ Einfüllen in Vertiefungen erzeugt. Dabei ist es besonders vorteilhaft, dass strukturierte Schichten einfach durch Bedrucken/Rakeln erzeugbar sind und nicht, wie in der herkömmlichen Halbleitertechnologie, durch Photomasken und Ätzschritte hergestellt werden müssen.

Die bevorzugte Verwendung einer Vorrichtung zur Feststellung und/oder Weiterleitung zumindest eines Umwelteinflusses ist in der Industrie, der Überwachung/Sensorik und/oder im Transport. In der Medizintechnik sind sie als Einmal-Sensoren von Interesse.

Beispielsweise dient die Vorrichtung als Etikett oder Teil eines Etiketts um transparent zu machen, welchen Umwelteinflüssen der etikettierte Gegenstand ausgesetzt war. Außerdem kann sie als RFID-Tag, als Briefmarke, auf einer Transportverpackung, in einem Pharmazieprodukt, einem Tiefkühlprodukt, an feuchteempfindlichen Teilen, als Teil einer Photozelle, und im Spielzeug sinnvoll angebracht sein. Nicht zuletzt kann die Vorrichtung als Temperatursensor (kann umgekehrt auch eine Miniheizung sein, die sich durch die Elektronik regeln lässt), als Drucksensor (kann umgekehrt auch Minilautsprecher sein), als Gassensor, und/oder als Sicherheitselement (Warnung vor CO-Vergiftung) dienen.

Im folgenden wird die Erfindung noch anhand von 4 Figuren, die Ausführungsformen der Erfindung zeigen, näher erläutert.

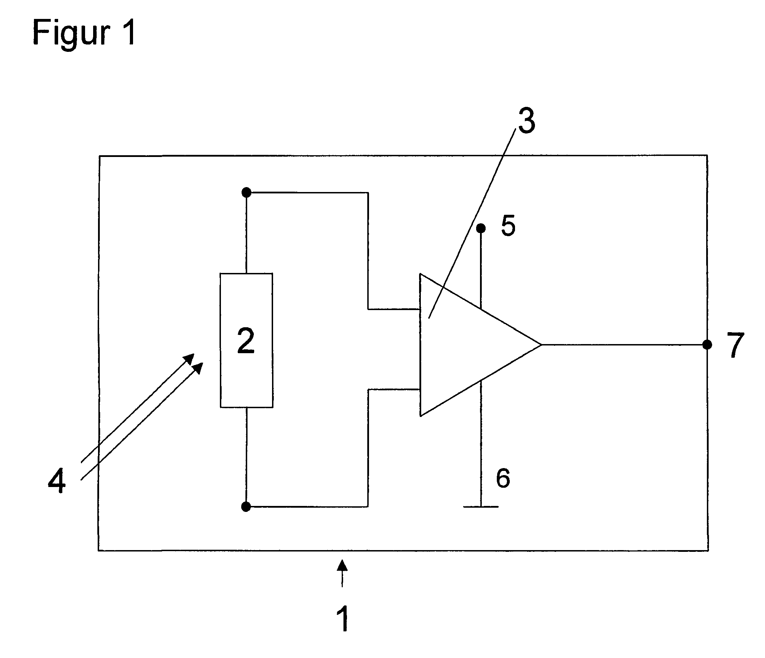

Figur 1 zeigt ein Blockschaltbild der Vorrichtung zur Feststellung und/oder Weiterleitung zumindest eines Umwelteinflusses 1. Zumindest ein Umwelteinfluss 4 bewirkt im Empfängerelement oder Sensor 2 eine Änderung eines Widerstands und/oder eine Erzeugung von Spannung, die einen Stromfluss zu einem Element 3 der Auswerteschaltung entweder verändert und/oder initiiert. Das Element 3 der Auswerteschaltung ist an eine Versorgungsspannung 5 und eine Masse 6 angeschlossen. Die Auswerteschaltung verfügt über eine Auswerteelektronik auf der Basis von organischen Feld-Effekt-Transistoren, mit deren Hilfe das empfangene Signal entweder digital oder analog zu Signalausgang 7 weitergeleitet wird.

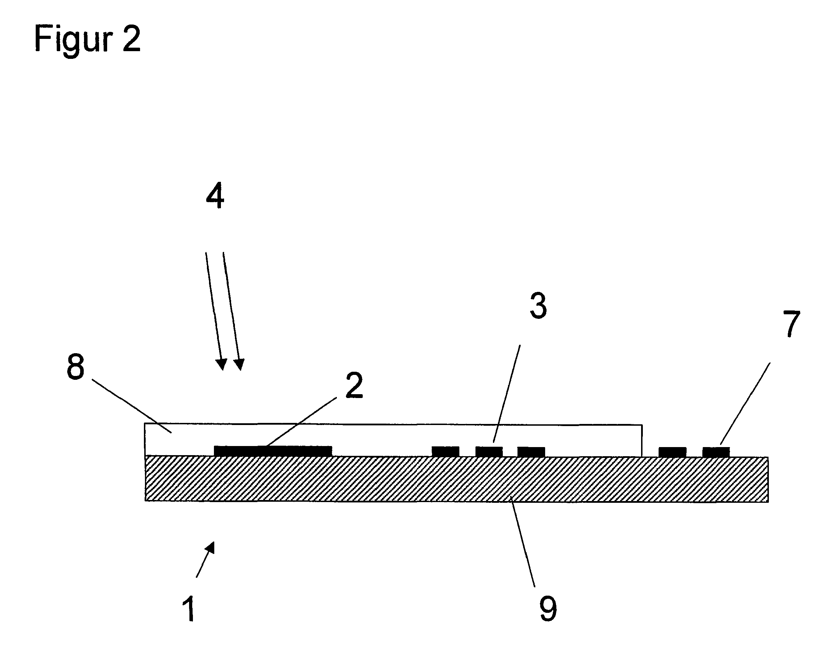

Figur 2 zeigt einen Querschnitt durch eine Vorrichtung zur Feststellung und/oder Weiterleitung zumindest eines Umwelteinflusses 1. Zu erkennen ist ganz links auf dem Substrat oder Träger 9, der z.B. flexibel also eine Folie sein kann, die Verkapselung 8, die je nach Umwelteinfluss, verschieden, also z.B. transparent oder unter Aussparung des Empfängerelements 2 (z.B. wenn der Druck oder die Gaszusammensetzung gemessen werden soll) aufgebracht sein kann. Unter der Verkapselung 8 befindet sich im gezeigten Fall das Empfängerelement 2, auf das durch die Verkapselung 8 hindurch der Umwelteinfluss 4, z.B. Licht, Wärme und/oder Feuchtigkeit(je nach Art der Verkapselung. etc, einwirkt. Je nachdem, welcher Umwelteinfluss empfangen werden soll, ist die Verkapselung dafür durchlässig oder an der empfangenden Stelle offen.

Unter der Verkapselung 8 befindet sich auch das Element 3, das die organische Auswerteelektronik umfasst. Außerhalb der Verkapselung 8 sind das Ausgangssignal und/oder die Anschlusskontakte 7. Je nach Sensortyp kann das eigentliche Sensorelement sich auch außerhalb einer Verkapselung befinden, z.B. Feuchtesensor.

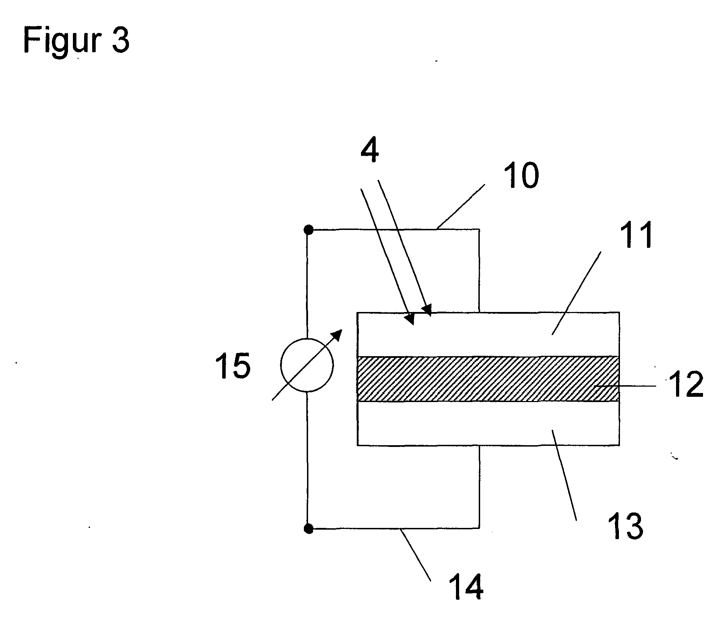

Figur 3 zeigt den einfachsten prinzipiellen Aufbau eines Empfängerelements 2, das einen Umwelteinflusse, z.B. Licht empfangen kann. Zu erkennen ist das Gerät zur Messung der Photospannung oder des Photostromes 10, das über eine erste Zuleitung 11 mit einem ersten organischen Leitermaterial 12 verbunden ist. Auf dieses erste organische Leitermaterial 12 trifft das Licht 4 auf und erzeugt z.B. durch Ladungstrennung in dem Material Strom oder Spannung. Dieser Strom geht durch das organische halbleitende Material 13 und fließt zum zweiten Leitermaterial 14, das wiederum über die zweite Zuleitung 15 mit dem Gerät zur Messung der Photospannung oder des Photostroms verbunden ist.

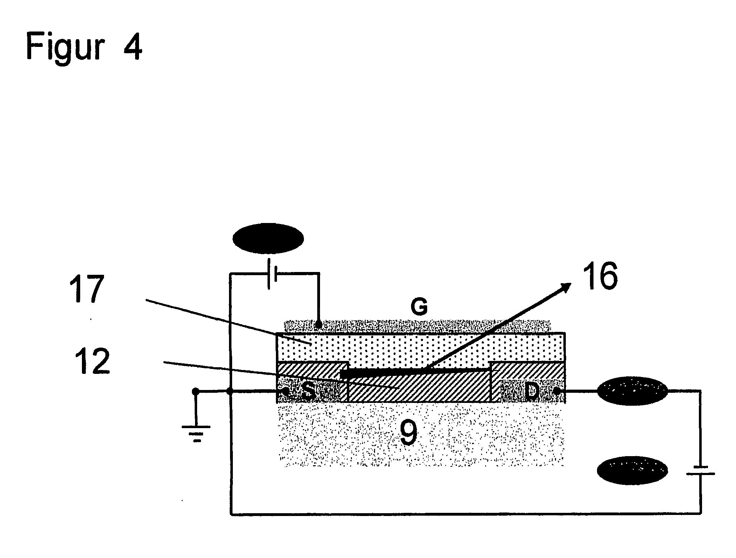

In Figur 4 ist ein prinzipieller Aufbau eines einfachen organischen Feld-Effekt-Transistors, wie er als Auswerteelektronik eingesetzt werden kann, gezeigt. Auf einem Substrat 9 sind im Abstand voneinander zwei Elektroden, die Source S und die Drain Elektrode D aufgebracht, die durch eine Schicht mit halbleitendem organischem Material 13 verbunden sind. Die Drain Elektrode D ist an die Versorgungsspannung 5 und die Source Elektrode S an die Masse 6 angeschlossen. Die obere Gate Elektrode G ist an die Zuleitung vom Empfängerelement 2 angeschlossen. Sobald über das Empfängerelement 2 Strom zur Gate Elektrode G fließt, wird durch den entstehenden Feld-Effekt, der durch die Isolatorschicht 17 durch wirkt ein leitfähiger Kanal 16 in der halbleitenden Schicht zwischen der Source und der Drain Elektrode erzeugt.

## Patentansprüche

1. Vorrichtung zur Feststellung und/oder Weiterleitung zumindest eines Umwelteinflusses (1), zumindest eine organisch basierte halbleitende Schicht (13) umfassend,
wobei die Vorrichtung zumindest ein Empfängerelement (2),
das zumindest einen Umwelteinfluss (4) aufnimmt und in ein elektrisches Signal wandelt und zumindest eine Auswerteschaltung (3), die ein empfangenes Signal bearbeitet und weiterleitet, umfasst,
**dadurch gekennzeichnet, dass**
in zumindest einem Empfängerelement (2) und in zumindest einem Element der Auswerteschaltung (3) der Vorrichtung (1) zumindest ein organisches funktionelles Material gleich ist.

2. Vorrichtung nach Anspruch 1,
**dadurch gekennzeichnet, dass**
sie mehrere Umwelteinflüsse parallel und/oder hintereinander empfängt, verarbeitet und weiterleitet.

3. Vorrichtung nach einem der vorstehenden Ansprüche,
**dadurch gekennzeichnet, dass**
sie die empfangenen Umwelteignale digital oder analog weiterleitet.

4. Vorrichtung nach einem der vorstehenden Ansprüche,
**dadurch gekennzeichnet, dass**
zumindest ein Empfängerelement (2) oder eine Auswerteschaltung (3) der Vorrichtung (1) auf einem Substrat (9), das eine flexible Folie ist, aufgebracht ist.

5. Verfahren zur Herstellung einer Vorrichtung nach einem der Ansprüche 1 bis 4,
**dadurch gekennzeichnet, dass**
durch Beschichten mit organischem Material auf zumindest einem Substrat (9) zumindest ein Empfängerelement (2), eine Auswerteschaltung (3) und/oder eine dazugehörige Verschaltung aufgebaut wird.

6. Verfahren nach Anspruch 5,
**dadurch gekennzeichnet, dass**
die Beschichtung zumindest teilweise durch Bedrucken und/oder Rakeln erfolgt.

7. Verfahren nach einem der Ansprüche 5 oder 6,
**dadurch gekennzeichnet, dass**
die Beschichtung in einem kontinuierlichen Prozess erfolgt.

8. Verwendung einer Vorrichtung nach einem der Ansprüche 1. bis 4 in der Industrie, der Überwachung/Sensorik, der Medizintechnik und/oder im Transport.

9. Verwendung einer Vorrichtung nach einem der Ansprüche 1 bis 4 in der Steuerung/Schaltung einer Heizung, als Temperatursensor, als Sensor, als Drucksensor oder als Lautsprecher und/oder als Sicherheitselement.

## Claims

1. Device for detecting and/or passing on at least one environmental influence (1), comprising at least one organically based semiconducting layer (13), wherein the device comprises at least one receiver element (2) which picks up at least one environmental influence (4) and converts the latter into an electrical signal, and at least one evaluation circuit (3) which processes and passes on a received signal,
**characterized in that**
in at least one receiver element (2) and in at least one element of the evaluation circuit (3) of the device (1) at least one organic functional material is the same.

2. Device according to Claim 1,
**characterized in that**
it receives, processes and passes on a plurality of environmental influences in parallel and/or in succession.

3. Device according to either of the preceding claims,
**characterized in that**
it passes on the received environmental signals in digital or analogue form.

4. Device according to any of the preceding claims,
**characterized in that**
at least one receiver element (2) or an evaluation circuit (3) of the device (1) is applied on a substrate (9), which is a flexible film.

5. Method for producing a device according to any of Claims 1 to 4,
**characterized in that**
at least one receiver element (2), an evaluation circuit (3) and/or an associated interconnection are/is constructed by coating with organic material on at least one substrate (9).

6. Method according to Claim 5,
**characterized in that**
the coating is at least partly effected by printing and/or blade coating.

7. Method according to either of Claims 5 and 6,
**characterized in that**
the coating is effected in a continuous process.

8. Use of a device according to any of Claims 1 to 4 in industry, monitoring/sensor technology, medical technology and/or in transport.

9. Use of a device according to any of Claims 1 to 4 in the control/switching of a heating system, as a temperature sensor, as a sensor, as a pressure sensor or as a loudspeaker and/or as a safety element.

## Revendications

1. Dispositif permettant de déterminer et/ou de retransmettre au moins une influence de l'environnement (1), comprenant au moins une couche semi-conductrice (13) à base organique, ledit dispositif comprenant au moins un élément récepteur (2), qui enregistre au moins une influence de l'environnement (4) et la convertit en signal électrique, et au moins un circuit d'évaluation (3) qui traite et retransmet un signal reçu, **caractérisé en ce que** dans au moins un élément récepteur (2) et dans au moins un élément du circuit d'évaluation (3) du dispositif (1), au moins un matériau fonctionnel organique est identique.

2. Dispositif selon la revendication 1, **caractérisé en ce qu'**il reçoit, traite et retransmet plusieurs influences de l'environnement en parallèle et/ou consécutivement.

3. Dispositif selon l'une quelconque des revendications précédentes, **caractérisé en ce qu'**il retransmet de manière numérique ou analogique les signaux reçus de l'environnement.

4. Dispositif selon l'une quelconque des revendications précédentes, **caractérisé en ce qu'**au moins un élément récepteur (2) ou un circuit d'évaluation (3) du dispositif (1) est appliqué sur un substrat (9) qui se présente comme une feuille souple.

5. Procédé de fabrication d'un dispositif selon l'une quelconque des revendications 1 à 4, **caractérisé en ce qu'**une enduction avec un matériau organique sur au moins un substrat (9) permet de constituer au moins un élément récepteur (2), un circuit d'évaluation (3) et/ou un câblage associé.

6. Procédé selon la revendication 5, **caractérisé en ce que** l'enduction est effectuée au moins en partie par impression et/ou par enduction à la racle.

7. Procédé selon l'une quelconque des revendications 5 ou 6, **caractérisé en ce que** l'enduction est effectuée au cours d'un processus en continu.

8. Utilisation d'un dispositif selon l'une quelconque des revendications 1 à 4 dans l'industrie, la surveillance/ la technologie des capteurs, la technique médicale et/ou le transport.

9. Utilisation d'un dispositif selon l'une quelconque des revendications 1 à 4 dans la commande/ le réglage d'un système de chauffage, comme capteur de température, comme capteur, comme capteur de pression ou comme haut-parleur et/ou comme élément de sécurité.
